# EUROPÄISCHE PATENTSCHRIFT

(11) **EP 1 711 356 B1**
(45) Veröffentlichungstag und Bekanntmachung des Hinweises auf die Patenterteilung: **24.12.2008**
(21) Anmeldenummer: 05700305.5
(22) Anmeldetag: 13.01.2005
(51) Int. Cl.: B60C 27/06

(54) **VORRICHTUNG ZUM WERKZEUGFREIEN VERSTELLBAREN VERBINDEN ZWEIER KETTENGLIEDER EINER GESCHLOSSENEN GLIEDERKETTE IN UNTERSCHIEDLICHEN ABSTÄNDEN UND/ODER REPARIEREN EINER GEBROCHENEN GLIEDERKETTE**
DEVICE FOR ADJUSTABLY CONNECTING, WITHOUT USING TOOLS, TWO CHAIN LINKS OF A CLOSED LINK CHAIN AT DIFFERENT DISTANCES AND/OR FOR REPAIRING A BROKEN LINK CHAIN
DISPOSITIF D'ASSEMBLAGE, SANS L'AIDE D'OUTIL, DE DEUX MAILLONS D'UNE CHAINE FERMEE, AVEC POSSIBILITE DE REGLAGE A DES DISTANCES DIFFERENTES, ET/OU DE REPARATION D'UNE CHAINE CASSEE

(30) Priorität: 07.02.2004 CH 186042004; 16.04.2004 CH 672042004; 21.09.2004 CH 154704
(43) Veröffentlichungstag der Anmeldung: 18.10.2006
(73) Patentinhaber: Confon AG, CH-9424 Rheineck (CH)
(72) Erfinder: PREUSKER, Werner, 88605 Sauldorf (DE)
(74) Vertreter: Gachnang, Hans Rudolf
(86) Internationale Anmeldenummer: PCT/CH2005/000010
(87) Internationale Veröffentlichungsnummer: WO 2005/075222

(56) Entgegenhaltungen:
- CH-A- 386 865
- CH-A5- 670 488
- DE-A1- 3 014 061
- DE-U1- 7 732 129
- US-A- 1 385 554
- US-A- 1 598 680
- US-A- 1 631 346

## Beschreibung

Gegenstand der Erfindung ist eine Vorrichtung zum werkzeugfreien verstellbaren Verbinden zweier Kettenglieder einer geschlossenen Gliederkette in unterschiedlichen Abständen und zum Reparieren einer gebrochenen Gliederkette gemäss Oberbegriff des Patentanspruchs 1.

Geschlossene Ketten, Kettennetze, Schneeketten, Reifenschutzketten und weitere Kettensysteme lassen sich in der Länge oder Breite (bei Gitter- oder Leiterketten) nicht verstellen, ohne die Kette, bzw. einzelne Kettenglieder zu öffnen und Kettenglieder zu entfernen oder hinzuzufügen.

Aus der DE-A1 30 14 061 ist ein gattungsgemäßes Verkürzungselement für Reifenketten bekannt, bei dem zwischen zwei Endkettengliedern ein Verbindungsglied eingehängt ist, welches ermöglicht, den Abstand zwischen den beiden letzten Kettengliedern zu verlängern bzw. zu verkürzen. Für eine Leiterkette mit zwei Kettensträngen müssen zwei Verbindungsglieder eingesetzt werden, was das Verkürzen bzw. Verlängern umständlich macht. Zudem muss ein Sicherungsglied eingesetzt werden, damit die Kettenglieder nicht aus dem Verbindungsglied herausspringen, wenn sie nicht gespannt sind. Solche Sicherungsglieder gehen erfahrungsgemäss meist nach wenigen hundert Metern Fahrstrecke verloren, wodurch die Sicherung der Kette nicht mehr gewährleistet ist.

Aus der CH 670488 ist ein Längeeinstellelement für Gleitschutzketten bekannt, dessen Aufbau mit Ausnahme eines Einführschlitzes demjenigen der DE-A1 30 14 061 entspricht, mit dem Nachteil, dass die Kettenglieder in das Verbindungsglied eingeschweisst werden müssen.
Aus der CH-A5 386865 ist ein Verschlusshaken für Ketten, insbesondere für Seitenteile an Gleitschutzketten bekannt, mit welchem beim Montieren der Gleitschutzkette die notwendigerweise offenen Enden miteinander verbunden werden können. Solche Verschlusshaken können nicht zum Verbinden der Kettenstränge auf den Laufflächen verwendet werden, weder für Einzel- noch für Doppelstränge.
Aus der US 1,385,554 ist ein Reparaturglied für Fahrzeugketten bekannt, das ein gebrochenes Kettenglied ersetzen kann. Ein solches Reparaturglied ist nicht in der Lage, die Länge eines Kettenstranges zu verstellen. Zudem besteht das Reparaturglied aus zwei Teilen, die durch ein Niet miteinander verbunden sind. Durch die drehbewegliche Verbindung des Reparaturglieds durch ein Niet, welches bei jeder Radumdrehung abgenutzt wird, kann keine Kette für eine hohe Laufdauer bzw. dauerhaft repariert werden.
Aus der US 1,631,346 ist ein weiteres Reparaturglied für Ketten bekannt, welches durch mechanisches Verbiegen, d.h. Schliessen des c-förmigen Körpers, mit den Kettenenden verbunden werden. Biegsame Reparaturglieder können nicht gehärtet sein, so dass deren Einsatzdauer beschränkt ist. Im weiteren kann durch ein solches Reparaturglied keine Längeneinstellung der Kette erfolgen.
Aus dem DE GM 77 32 129 ist eine Schliessvorrichtung für Seitenketten von Gleitschutzketten bekannt. Wie der Titel es sagt, dient das Verschliessglied zum Zusammenhängen der flankenseitigen Ketten nach der Montage auf dem Rad. Im weiteren sind solche Verbindungsglieder nur durch Verbiegen von Teilen verschliessbar. Eine Verwendung solcher Verschliessglieder auf den Laufflächen einer Gleitschutzvorrichtung ist nicht möglich.

Aus der US 1,598,680 ist ein Verbindungsglied für Ketten bekannt, bei dem das letzte oder eines dem letzten folgenden Kettenglied durch Verdrehen einhängbar und damit die Länge der Kette verstellbar ist. Solche frei einhängbaren Verbindungsglieder können an Laufflächen von Gleitschutzketten nicht eingesetzt werden, da das verdrehte Kettenglied bei jeder Radumdrehung auf dem Boden anschlägt. Zudem kann mit einem solchen Verbindungsglied nur eine einzige Kette verbunden werden und deren Länge ist nicht einstellbar.

Eine Aufgabe der vorliegenden Erfindung ist die Schaffung einer Vorrichtung zum Verkürzen, Verlängern und Reparieren einer Gliederkette mit zwei Kettensträngen, ohne Zuhilfenahme von Werkzeugen.

Gelöst wird diese Aufgabe durch eine Vorrichtung gemäss den Merkmalen des Patentanspruchs 1. Vorteilhafte Ausgestaltungen der Erfindung sind in den abhängigen Ansprüchen umschrieben.

Es gelingt mit dem kostengünstig herstellbaren Verbindungsglied sowohl den Abstand zwischen zwei Kettengliedern zu verkleinern oder zu vergrössern als auch nach einem Kettenbruch die benachbart zum gebrochenen Kettenglied liegenden Kettenglieder miteinander zu verbinden, ohne dass ein Werkzeug zuhilfe genommen werden muss. Die Länge oder Breite der Kette kann ohne Öffnen von Kettengliedern verändert werden. Bei Reifenketten muss die Kette nicht vom Reifen abgenommen werden.
Auch bei Reifenschutzketten für Fahrzeuge in Steinbrüchen lässt sich das Verbindungsglied als dauerhaftes Ersatzteil zwischen zwei Kettengliedern einsetzen, da das Verbindungsglied aus gehärtetem Stahl erzeugt werden kann.

Das Verbindungsglied kann unabhängig vom Fabrikat der Kette benutzt werden.

Anhand illustrierter Ausführungsbeispiele wird die Erfindung näher erläutert. Es zeigen
- Figur 1: ein plattenförmiges Verbindungsglied für eine Einfach- oder Doppelkette,
- Figur 2: das Verbindungsglied gemäss Figur 1 mit zwei darin gehaltenen Kettensträngen einer Doppelspur-Kette mit kleinem Abstand,
- Figur 3: das Verbindungsglied gemäss Figur 1 mit zwei darin gehaltenen Kettensträngen einer Doppelspur-Kette mit grossem Abstand,
- Figur 4: eine zweite Ausführungsform eines plattenförmigen Verbindungsglieds,
- Figur 5: eine Darstellung, die zeigt, in welcher Lage ein Kettenglied im Verbindungsglied in eine andere Position verschoben werden kann,
darin gehaltenen Kettenstrang einer Kette mit
- Figur 6: eine weitere vorteilhafte Ausführungsform eines zweiteiligen Verbindungsglieds mit Einführschlitz vor dem Einsetzen in eine Kette,
- Figur 7: eine perspektivische Darstellung der beiden Verbindungsglieder nach Figur 6 eingesetzt in eine Kette (Kette schematisch dargestellt),
- Figur 8: eine Seitenansicht der Verbindungsglieder gemäss Figur 7 und der darin eingefädelten Kettenglieder und
- Figur 9: eine weitere Ausführungsform der Verbindungsglieder.

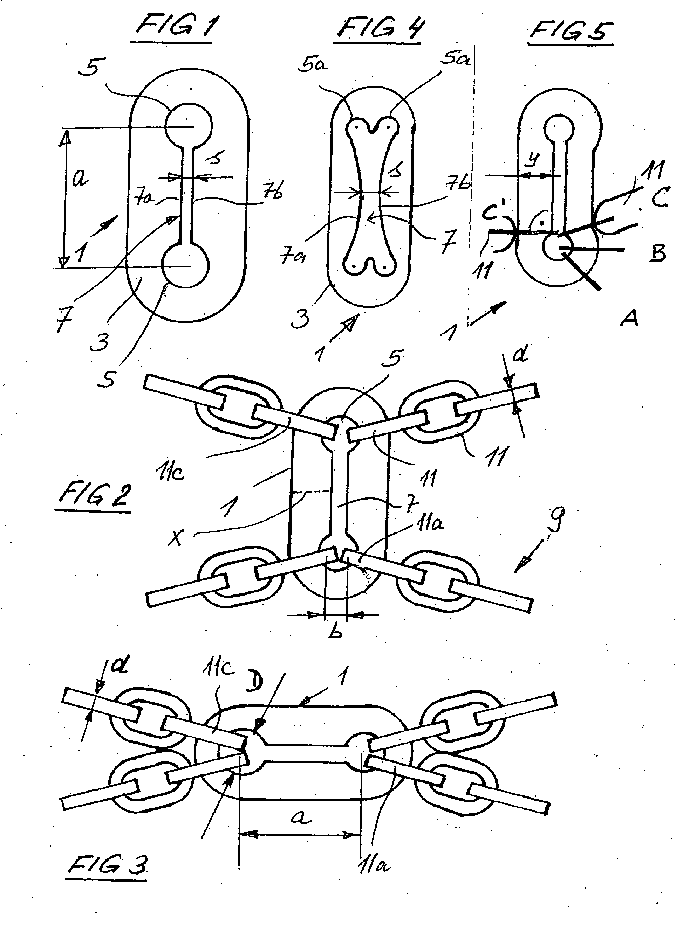

In Figur 1, welche die erste Ausgestaltung der Erfindung darstellt, ist ein Verbindungsglied 1 ersichtlich, welches eine Formscheibe 3 umfasst, in welcher im Abstand a zwei kreisförmige Ausnehmung 5 angeordnet sind, welche durch einen Schiebeschlitz 7 miteinander verbunden sind. Die Breite s des Schlitzes 7 ist vorzugsweise nur geringfügig grösser als der Durchmesser d des Drahtes einer durch das Verbindungsglied 1 zu verbindenden Kette 9. Der Draht kann einen beliebigen Querschnitt aufweisen, z.B. rund, eckig, oval. Vorzugsweise ist die Breite des Schlitzes 7 kleiner als der zweifache Durchmesser d des Kettendrahtes.

In der Ausgestaltung der Formscheibe 3 gemäss Figur 4 treten an die Stelle der zwei kreisförmigen Ausnehmungen 5 vier kleinere Ausnehmungen 5a in Herzform, die durch einen Schiebeschlitz 7 miteinander verbunden sind. Der Schiebeschlitz 7 ist in dieser Ausgestaltung nicht durch zwei parallele Seitenkanten 7a und 7b begrenzt, sondern durch zwei bogenförmig verlaufende, die sich an einer Stelle bis auf die Distanz s nähern. Die Distanz s entspricht wiederum einem Betrag, der etwas grösser ist als der Durchmesser d des Drahtes, aus dem die Kettenglieder 11 der Kette 9 hergestellt sind.

In Figur 5 ist grafisch dargestellt, dass eine Verschiebung eines Kettengliedes 11 aus der unten liegenden Ausnehmung 5 in die oben liegende weder aus einer ersten Position A noch aus einer Position B, sondern nur in einer vorgegebenen Winkellage, nämlich in Position C bzw. C' möglich ist. In den Positionen C,C' entspricht die lichte Länge der verbleibenden öffnung im Kettenglied 11 der Breite Y des Steges am Verbindungsglied 3. Dies verhindert, dass bei der Lagerung der Kette 9, wenn die Kette 9 nicht unter Spannung steht, einzelne Kettenglieder 11 unbeabsichtigt ihre Lage innerhalb des Verbindungsglieds 1 ändern können. Die Lageveränderung ist folglich nur in einem vorgegebenen Winkel, z.B. 90°, möglich.

Anhand der Figuren 2 und 3 und dem Verbindungsglied 1, wie es in Figur 1 dargestellt ist, wird die Funktion des Verbindungsglieds 1 in einer Kette 9 näher erläutert. Im Verbindungsglied 1 gemäss Figur 2 sind in den Ausnehmungen 5 je zwei Kettenglieder 11 von Kettengliedern 7 gehalten. Die Kettenglieder 11 können entweder geöffnet in die Ausnehmung 5 eingeführt und danach verschweisst worden sein, oder die Formscheibe 3 wurde vor dem Einführen geschlossener Kettenglieder 11 an der Stelle X geschlitzt und danach,_falls die Festigkeitsanforderungen dies erfordern, verschweisst. Die Kettenglieder 11 in Figur 2 gehören zu einer Schneekette mit zwei Kettensträngen, die sich vom Verbindungsglied 1 v-förmig zu einem nicht dargestellten, die beiden Ketten 9 verbindenden Steg führen. Der Abstand b zwischen den benachbarten, durch das Verbindungsglied 1 verbundenen Kettengliedern 11 ist in Figur 2 sehr klein.
Der Durchmesser D der Ausnehmungen 5 ist grösser als die Breite s des Schiebeschlitzes 7. Die Breite s des Schiebeschlitzes 7 ist zudem kleiner als der doppelte Durchmesser d des die Kettenglieder 11 bildenden Drahtes.

Verschiebt man nun beispielsweise das mit Bezugszeichen 11a bezeichnete Kettenglied im Schiebeschlitz 7 nach oben in die oben liegende Ausnehmung 5 und danach das mit Bezugszeichen 11c bezeichnete Kettenglied in die unten liegende Ausnehmung 5, so dreht sich das Verbindungsglied 1 bei einer Zugkraft auf die Ketten 9 im Uhrzeigersinn in die horizontale Lage wie in Figur 3 angegeben. Der Abstand zwischen den durch das Verbindungsglied 1 verbundenen Ketten 9 vergrössert sich nun auf den Betrag a. Der Abstand a ist im dargestellten Beispiel viermal so gross wie der Abstand b gemäss Figur 2. Dies entspricht etwa der Länge eines zusätzlichen Kettenglieds 11.

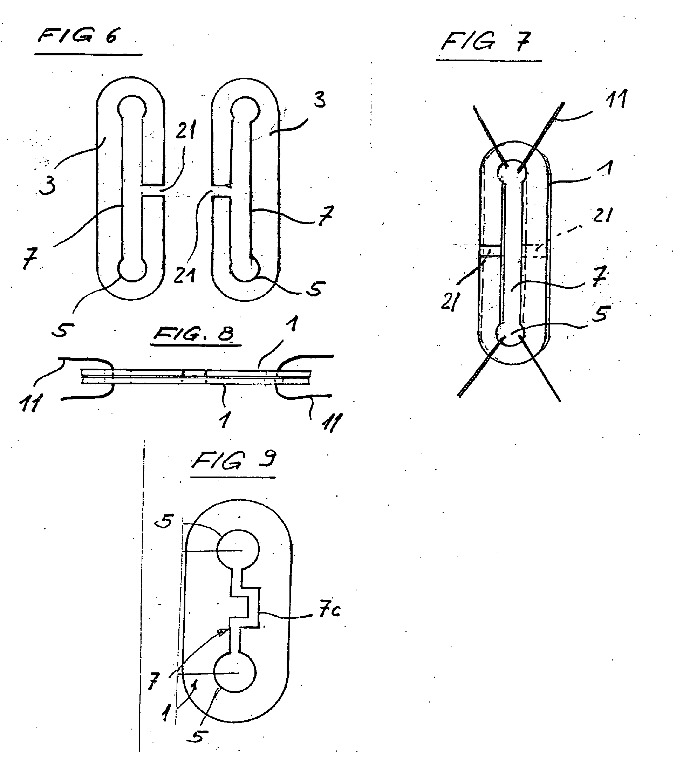

In der Ausgestaltung der Erfindung gemäss Figur 9 ist im Schiebeschlitz 7 eine Schikane 7c eingelassen, welche beispielsweise die Gestalt eines Mäanders aufweist. Der Schiebeschlitz 7 verläuft demzufolge nicht mehr geradlinig von der ersten zur zweiten Ausnehmung 5, sondern er ist in fünf Abschnitte aufgeteilt, nämlich drei parallel verlaufenden und zwei im wesentlichen senkrecht dazu verlaufende Abschnitte. Durch diese Massnahme (Schikane) wird sicher verhindert, dass keines der Kettenglieder 11 bei Nichtgebrauch der Kette 9, wenn sie beispielsweise in einem Beutel oder einem Behälter gestaut wird, aus Versehen von der einen Ausnehmung 5 zur andern Ausnehmung gleiten kann. Selbstverständlich kann auch bei dieser Ausgestaltung der Erfindung ein Einführschlitz 21, wie er später in den Figuren 6 und 7 gezeigt wird, vorgesehen werden.

Bei einer Schneekette wird im Anliefer-/Neuzustand das Verbindungsglied 1 vorerst gemäss Figur 3 eingesetzt sein und kann, entweder beim ersten Anlegen auf einen Reifen oder nach einergewissen Abnutzung des Reifens und der Kettenglieder 1 durch Verschleiss, in die Position gemäss Figur 2 gedreht werden, um die richtige Kettenlänge zu erhalten.
Die Funktionsweise der Ausgestaltung der Erfindung gemäss den Figur 4 entspricht exakt der beschriebenen gemäss den Figuren 2 und 3.

Die Formscheibe 3, die das Verbindungsglied 1 bildet, kann als Stanzteil oder als Metall-Spritzgussteil oder als Schmiedeteil hergestellt sein. Die Formscheibe 3 kann gehärtet werden oder nur deren Oberfläche.
Das erfindungsgemässe Verbindungsglied 1 kann unabhängig vom Fabrikat der Schnee- oder Schutzkette für Fahrzeuge in Steinbrüchen Verwendung finden. Es spielt dabei keine Rolle, ob die Kette aus Rund- oder aus Rechteckdraht hergestellt ist.

## Patentansprüche

1. Vorrichtung zum werkzeugfreien verstellbaren Verbinden zweier Kettenglieder (11) in einer geschlossenen Gliederkette (9) in unterschiedlichen gegenseitigen Abständen a,b und zum Reparieren einer gebrochenen Gliederkette (9) mit einem zwischen zwei Kettengliedern (11) einsetzbaren Verbindungsglied (1), wobei das Verbindungsglied (1) eine Formscheibe (3) mindestens mit einem Schiebeschlitz (7) mit einem ersten Ende und einem zweiten Ende, welche in einem Abstand a liegen, und in welchem Schlitz (7) zwei Kettenglieder (11) geführt sind, umfasst,
**dadurch gekennzeichnet, dass**
an den beiden Enden des Schlitzes (7) Ausnehmungen (5) für die Aufnahme von jeweils zwei Kettengliedern (11) der Gliederketten (9) zweier Kettenstränge ausgebildet sind.

2. Vorrichtung nach Anspruch 1, **dadurch gekennzeichnet, dass** der Schiebeschlitz (7) oder eine der Ausnehmungen (5) durch einen Einführschlitz (21) mit der Peripherie des Verbindungsgliedes (1) verbunden ist, der das Einführen der Kettenglieder (11) in den Schiebeschlitz (7) oder eine der Ausnehmungen (5) von ausserhalb zulässt.

3. Vorrichtung nach einem der Ansprüche 1 oder 2, **dadurch gekennzeichnet, dass**
- die Breite (s) des Schiebeschlitzes (7) kleiner ist als die Breite der Ausnehmungen (5,5a) und dass
- die Breite (s) des Schiebeschlitzes (7) kleiner ist als der zweifache Durchmesser (d) des die Kettenglieder (11) bildenden Drahtes.

4. Vorrichtung nach Anspruch 3, **dadurch gekennzeichnet, dass** die Ausnehmung (5) kreisförmig oder herzförmig ausgebildet ist.

5. Vorrichtung nach einem der Ansprüche 1 bis 4, **dadurch gekennzeichnet, dass** im Schiebeschlitz (7) eine mäanderförmige Schikane (7c) ausgebildet ist.

6. Vorrichtung nach einem der Ansprüche 1 bis 5, **dadurch gekennzeichnet, dass** das Verbindungsglied (5) als Stanzteil, Biegeteil, Schmiedeteil oder als Metall-Spritzgussteil hergestellt ist.

7. Vorrichtung nach einem der Ansprüche 2 oder 6, **dadurch gekennzeichnet, dass** jeweils zwei Verbindungsglieder (5) um 180° verdreht übereinanderliegend angeordnet sind.

## Claims

1. Device for the adjustable connection of two chain links (11) in a closed link chain (9) at variable reciprocal spacings a, b and for repairing a broken link chain (9) without the use of- a tool, the said device having a connecting link (1) that is usable between two chain links (9), wherein the connecting link (1) comprises a moulded disc (3) at least with one sliding slot (7) that has a first end and a second end, which are at a spacing a, and in which slot (7) two chain links (11) are guided, **characterised in that** recesses (5) are realised at the two ends of the slot (7), each accommodating two chain links (11) of the link chains (9) of two chains.

2. Device according to claim 1, **characterised in that** the sliding slot (7) or one of the recesses (5) is connected to the periphery of the connecting link (1) by means of a feed slot (21), which permits the introducing of the chain links (11) into the sliding slot (7) or one of the recesses (5) from externally.

3. Device according to one of claims 1 or 2, **characterised in that**
- the width (s) of the sliding slot (7) is smaller that the width of the recesses (5, 5a) and **in that**
- the width (s) of the sliding slot (7) is smaller than double the diameter (d) of the wire forming the chain link (11).

4. Device according to claim 3, **characterised in that** the recess (5) is circular or heart-shaped.

5. Device according to one of claims 1 to 4, **characterised in that** a meander-shaped chicane (7c) is realised in the sliding slot (7).

6. Device according to one of claims 1 to 5, **characterised in that** the connecting link (5)? is produced in the form of a stamping, a bent part, a forged part or an injection moulded metal part.

7. Device according to one of claims 2 or 6, **characterised in that** in each case two connecting links (5)? are disposed lying one on top of the other rotated by 180°.

## Revendications

1. Dispositif d'assemblage réglable sans outil de deux maillons (11) d'une chaîne (9) fermée à maillons à des distances (a,b) mutuelles différentes et pour réparer une chaîne (9) à maillons cassée par un maillon (1) d'assemblage pouvant être inséré entre deux maillons (11) de chaîne, le maillon (11) d'assemblage comprenant une rondelle (3) ayant au moins une fente (7) de coulissement ayant une première extrémité et une deuxième extrémité qui sont à une distance (a) et fente (7) dans laquelle sont guidés deux maillons (11) de chaîne,
**caractérisé en ce que**
aux deux extrémités de la fente (7) sont formés des évidements (5) de réception de respectivement deux maillons (11) de chaîne de la chaîne (9) à maillons de deux brins de chaîne.

2. Dispositif suivant la revendication 1,
**caractérisé en ce que**
la fente (7) de coulissement ou l'un des évidements (5) est assemblé par une fente (21) d'introduction à la périphérie du maillon (1) d'assemblage qui autorise l'introduction des maillons (11) de chaîne dans la fente (7) de coulissement ou dans l'un des évidements (5) de l'extérieur.

3. Dispositif suivant l'une des revendications 1 ou 2,
**caractérisé en ce que**
- la ou les largeurs de la fente (7) de coulissement est plus petite que la largeur des évidements (5, 5a) et **en ce que**
- la ou les largeurs de la fente (7) de coulissement est plus petite que deux fois le diamètre (d) du fil formant les maillons (11) de chaîne.

4. Dispositif suivant la revendication 3,
**caractérisé en ce que**
l'évidement (5) est en forme de cercle ou en forme de coeur.

5. Dispositif suivant l'une des revendications 1 à 4,
**caractérisé**
**en ce qu'**une chicane (7c) sinueuse est formée dans la fente (7) de coulissement.

6. Dispositif suivant l'une des revendications 1 à 5,
**caractérisé en ce que**
le maillon (5) d'assemblage est fabriqué sous la forme d'une pièce estampée, d'une pièce pliée, d'une pièce forgée ou d'une pièce métallique moulée par injection.

7. Dispositif suivant l'une des revendications 2 ou 6,
**caractérisé en ce que**
respectivement deux maillons (5) d'assemblage sont superposés en étant tournés de 180°.
